# EUROPÄISCHE PATENTSCHRIFT

(11) **EP 3 676 951 B1**
(45) Veröffentlichungstag und Bekanntmachung des Hinweises auf die Patenterteilung: **10.01.2024**
(21) Anmeldenummer: 18759945.1
(22) Anmeldetag: 27.08.2018
(51) Int. Cl.: H02P 6/26, H02P 29/50, H02P 7/29, H02P 3/08, H02P 3/12

(54) **ANSTEUERUNG EINES LÜFTERMOTORS FÜR EIN VERBESSERTES EMV-VERHALTEN**
CONTROL OF A FAN MOTOR FOR IMPROVED EMC BEHAVIOR
COMMANDE D'UN MOTEUR DE VENTILATEUR POUR L'AMÉLIORATION DE LA COMPATIBILITÉ ÉLECTROMAGNÉTIQUE

(30) Priorität: 29.08.2017 DE 102017119740
(43) Veröffentlichungstag der Anmeldung: 08.07.2020
(73) Patentinhaber: Elektrosil GmbH, 22761 Hamburg (DE)
(72) Erfinder: NIEMANN, Hendrik, 22761 Hamburg (DE); OPPERMANN, Martin, 22761 Hamburg (DE)
(74) Vertreter: RGTH
(86) Internationale Anmeldenummer: PCT/EP2018/073021
(87) Internationale Veröffentlichungsnummer: WO 2019/042936

(56) Entgegenhaltungen:
- DE-A1- 10 336 945
- DE-A1-102007 036 027
- DE-A1-102015 012 540
- US-A- 3 916 276
- US-A1- 2005 174 081

## Beschreibung

### Technisches Gebiet

Die Erfindung wird durch die Merkmale der unabhängigen Ansprüche definiert.

### Stand der Technik

Im Stand der Technik sind verschiedene Bauarten von elektrisch kommutierten Motoren bekannt. Beispielsweise werden dem Stator eines Motors pro voller Rotorumdrehung um 360° mehrere elektrische Stromimpulse zugeführt. Bei zweipulsigen Motoren werden den Statorwicklungssträngen beispielsweise während einer vollen Rotordrehung um 360° zwei zeitlich hintereinander folgende Statorstromimpulse zugeführt. Bei dreipulsigen, sechspulsigen oder mehrpulsigen Motoren werden entsprechend während einer vollen Rotordrehung um 360° drei, sechs oder mehr Statorstromimpulse zugeführt.

In der EP 20 25 054 B1 wird ein Verfahren zur Ansteuerung eines Lüftermotors beschrieben, wobei ein zusätzlicher steuerbarer Halbleiterschalter verwendet wird, welcher in der Zuleitung vom Gleichstrom-Zwischenkreis zur Parallelschaltung angeordnet ist. Hierdurch wird die Energiezufuhr von einer externen Gleichstromquelle zum Motor zu einem günstigen Zeitpunkt abgeschaltet und die Energie, die zum Abschaltzeitpunkt in dem betreffenden Wicklungsstrang gespeichert ist, über einen speziellen Freilaufkreis in ein motorisches Drehmoment transformiert. Dokument DE 10 2007 036027 A1 offenbart eine Vorrichtung, die einen Mehrphasenumrichter, einen Störungsdetektor, um eine Detektion einer Störung anzuzeigen, einen Sensor, um ein Drehzahlsignal bereitzustellen, das anzeigt, ob eine Drehzahl eines PM-Motors größer als eine Übergangsdrehzahl ist, und einen Controller umfasst.

DE 10 2015 012540 A1 betrifft ein Verfahren zum Betreiben eines Lenksystems für ein Kraftfahrzeug, das eine elektrischen Maschine mit mehreren Phasen umfasst, wobei vorgesehen ist, dass die Phasen in einem Dauerbetrieb unter Durchführung einer Standard-Pulsweitenmodulation über pulsweitenmodulierte Signale einer ersten elektrischen Größe angesteuert werden, wobei für den Fall, dass für das Lenksystem ein Fehler diagnostiziert wird, mindestens eine Phase unter Durchführung einer Not-Pulsweitenmodulation über pulsweitenmodulierte Signale der elektrischen Größe angesteuert wird.

Dokument US 3 916 276 A offenbart, dass ein Gleichstrommotor eine konstante voreingestellte Drehzahl bei Laständerungen aufrecht hält, wobei die voreingestellte Drehzahl manuell verändert werden kann. Das System umfasst eine Wechselstromquelle mit einem konventionellen Brückengleichrichter, der Thyristoren und Dioden verwendet, mit Mitteln zur Steuerung der Phase der Zündung der Thyristoren in Abhängigkeit von der Motordrehzahl im Vergleich zu einer Geschwindigkeitseinstellung.

US 2005/174081 A1 offenbart ein mehrstufiges dynamisches Bremswiderstandsnetzwerk mit einer Vielzahl von dynamischen Bremswiderständen zum Ableiten von regenerativer Energie als Wärme, die durch einen Motor oder Aktuator auf einen Systembus eingegeben wird, und eine Vielzahl von Schaltern zum Verbinden der dynamischen Bremswiderstände.

In der DE 103 36 945 A 1 wird ein Verfahren zum Abbremsen eines elektrischen Gebläsemotors, vorzugsweise eines elektrischen Gebläsemotors in einem Kraftfahrzeug, und eine entsprechende Vorrichtung dafür, vorgestellt.

### Darstellung der Erfindung: Aufgabe, Lösung, Vorteile

Aufgabe der vorliegenden Erfindung ist es, ein Verfahren zur elektrischen Ansteuerung eines Motors, insbesondere eines Lüftermotors, mit mehreren Wicklungssträngen bereitzustellen, dass zum einem das EMV-Verhalten des Lüftermotors gegenüber im Stand der Technik bekannten Lüftermotoren verbessert wird, wobei aber gleichzeitig die Geräusche, welche durch die Drehbewegung des Motors entstehen, gering gehalten werden.

Erfindungsgemäß ist hierfür ein Verfahren zur elektrischen Ansteuerung eines Motors, insbesondere eines Lüftermotors, mit mehreren Wicklungssträngen vorgesehen, wobei der Motor mindestens ein Mittel zum Erfassen einer Rotordrehzahl und/oder zum Erfassen einer Rotorlage eines Rotors des Motors aufweist. Die einzelnen Wicklungsstränge werden mittels einer Ansteuerelektronik des Motors alternierend mit Stromimpulsen beaufschlagt. Erfindungsgemäß wird während einer vollen Umdrehung des Rotors mindestens einem der Wicklungsstränge kein Stromimpuls zugeführt, falls die erfasste Rotordrehzahl (Tᵢₛₜ) größer als eine vorgegebene Solldrehzahl (Tₛₒₗₗ) ist.

Vorzugsweise ist das Verfahren für einen Außenläufermotor sowie einen kollektorlosen Motor vorgesehen. Die einzelnen Wicklungsstränge sind bevorzugterweise Wicklungen des Stators. Unter einer alternierenden Bestromung der Wicklungsstränge ist zu verstehen, dass den einzelnen Wicklungssträngen aufeinanderfolgende Stromimpulse zugeführt werden. Unter einer vollen Umdrehung des Rotors ist eine Umdrehung um 360° zu verstehen.

Das Unterbrechen der Stromzufuhr während einer vollen Umdrehung des Rotors wird im Sinne der Erfindung auch als Slotabschaltung bezeichnet. Hierunter ist zu verstehen, dass zumindest während einer Kommutierungsphase mindestens einem Wicklungsstrang kein Strom beziehungsweise Stromimpuls zugeführt wird.

Das erfindungsgemäße Verfahren sieht somit vor, dass regelmäßig die Ist-Drehzahl des Rotors beziehungsweise die aktuelle Rotordrehzahl gemessen wird, mit einer vorgegebenen Solldrehzahl (Tₛₒₗₗ) verglichen wird und in einer folgenden Kommutierungsphase der Stromimpuls ausgesetzt wird, falls die Differenz eine vorgegebene Schwelle beziehungsweise Größe überschreitet oder falls die Ist-Drehzahl (Tᵢₛₜ) größer als die vorgegebene Solldrehzahl (Tₛₒₗₗ) ist.

Ferner ist erfindungsgemäß vorgesehen, dass mindestens ein schaltbarer elektrischer Widerstand für zumindest eine folgende Kommutierungsphase mittels eines elektrischen Schaltelements dazu geschaltet wird, falls die erfasste Rotordrehzahl (Tᵢₛₜ) größer als eine vorgegebene Solldrehzahl (Tₛₒₗₗ) ist. Hierfür weist der Motor ebenfalls mindestens ein Mittel zum Erfassen einer Rotordrehzahl (Tᵢₛₜ) und/oder einer Rotorlage eines Rotors des Motors sowie eine Ansteuerelektronik zum alternierenden Beaufschlagen der Wicklungsstränge mit Stromimpulsen auf.

Erfindungsgemäß ist ein kombiniertes Verfahren aus Grobjustierung der Rotordrehzahl (Tᵢₛₜ) und Feinjustierung der Rotordrehzahl (Tᵢₛₜ) vorgesehen. Zur Grobjustierung der Rotordrehzahl (Tᵢₛₜ) wird während einer vollen Umdrehung des Rotors nach einem vorbeschriebenen Verfahren mindestens einem der Wicklungsstränge kein Stromimpuls zugeführt, falls die erfasste Rotordrehzahl (Tᵢₛₜ) größer als die vorgegebene Solldrehzahl (Tₛₒₗₗ) ist. Zur Feinjustierung der Rotordrehzahl (Tᵢₛₜ) wird nach einem vorbeschriebenen Verfahren mindestens ein schaltbarer elektrischer Widerstand für mindestens eine folgende Kommutierungsphase mittels des elektronischen Schaltelementes dazu geschaltet, falls die erfasste Rotordrehzahl (Tᵢₛₜ) größer als eine vorgegebene Solldrehzahl (Tₛₒₗₗ) ist.

Das Verfahren sieht somit eine Differenzierung zwischen Grobjustierung und Feinjustierung vor. Sollte die Differenz zwischen der ermittelten Rotordrehzahl (Tᵢₛₜ) und der vorgegebenen Solldrehzahl (Tₛₒₗₗ) eine vorgegebene Schwelle beziehungsweise einen vorgegebenen Wert überschreiten und die Rotordrehzahl (Tᵢₛₜ) größer als die Solldrehzahl (Tₛₒₗₗ) sein, wird mittels Grobjustierung beziehungsweise Slotabschaltung die Rotordrehzahl (Tᵢₛₜ) in einem ersten Schritt reduziert. Ist die nach der Grobjustierung erfasste Rotordrehzahl (Tᵢₛₜ) weiterhin größer als die vorgegebene Solldrehzahl (Tₛₒₗₗ), aber kleiner als die vorgegebene Schwelle, wird in einem nächsten Schritt mittels Feinjustierung und somit mittels Schalten der Widerstände die Stromstärke des Stromimpulses für mindestens eine Kommutierungsphase reduziert. Die vorbeschriebene Grobjustierung kann vor oder nach der Feinjustierung durchgeführt werden.

Unter einem schaltbaren Widerstand ist ein elektrischer Ohmscher Widerstand zu verstehen, welcher mittels des elektrischen Schaltelementes, beispielsweise mittels eines Transistors, dazu schaltbar beziehungsweise abschaltbar ist. Unter Hinzuschalten ist zu verstehen, dass der elektrische Widerstand in Reihe zum Wicklungsstrang der jeweiligen Kommutierungsphase geschaltet ist und somit die Stromstärke durch den Wicklungsstrang effektiv als Ohmscher Verbraucher reduziert. Unter einem Abschalten des Widerstands ist ein Kurzschließen des Widerstands durch das elektronische Schaltelement zu verstehen. Somit wird die Stromstärke durch den Wicklungsstrang während einer Kommutierungsphase nicht effektiv durch den schaltbaren Widerstand reduziert.

Bevorzugterweise wird die Rotordrehzahl (Tᵢₛₜ) kontinuierlich erfasst und es wird für eine folgende Kommutierungsphase die Stromzufuhr an einem der Wicklungsstränge ausgesetzt, falls die Rotordrehzahl (Tᵢₛₜ) größer als die vorgegebene Solldrehzahl (Tₛₒₗₗ) ist. Unter einer Kommutierungsphase ist die Bestromung eines Wicklungsstranges zu verstehen. Bei einem Motor mit beispielsweise vier Wicklungssträngen sind somit für eine volle Umdrehung des Rotors vier Kommutierungsphasen vorgesehen. Ist die gemessene Rotordrehzahl (Tᵢₛₜ) größer als die vorgegebene Solldrehzahl (Tₛₒₗₗ) wird zumindest während einer der vier Kommutierungsphasen während einer vollen Umdrehung des Rotors der entsprechende Wicklungsstrang nicht bestromt.

Das Mittel zum Erfassen der Rotordrehzahl ist bevorzugterweise als Hallsensor ausgebildet. Mittels des Hallsensors kann direkt oder indirekt über die Rotorlage die momentane Rotordrehzahl (Tᵢₛₜ) erfasst werden und bevorzugterweise während jeder einzelnen Kommutierungsphase mit der vorgegebenen Solldrehzahl (Tₛₒₗₗ) verglichen werden. Besonders bevorzugterweise kann bei einem Überschreiten der Rotordrehzahl (Tᵢₛₜ) direkt in der folgenden Kommutierungsphase die Stromzufuhr unterbrochen werden.

Zur Reduzierung der Rotordrehzahl wird während der vollen Umdrehung des Rotors bevorzugterweise höchstens für die Hälfte der Wicklungsstränge des Motors diesen kein Stromimpuls zugeführt, falls die erfasste Rotordrehzahl (Tᵢₛₜ) größer als die vorgegebene Solldrehzahl (Tₛₒₗₗ) ist. Dadurch kann ein besonders stabiles Laufverhalten des Motors sichergestellt werden. Besonders bevorzugterweise werden während einer vollen Umdrehung des Rotors höchstens ein Viertel der Wicklungsstränge des Motors nicht bestromt, falls die erfasste Rotordrehzahl (Tᵢₛₜ) größer als die vorgegebene Solldrehzahl (Tₛₒₗₗ) ist.

Bei dem Verfahren zur Ansteuerung des Motors ist somit bevorzugterweise vorgesehen, dass während der einzelnen Kommutierungsphasen die entsprechenden Wicklungsstränge mit Stromimpulsen mit maximaler Stromstärke beaufschlagt werden. Zur Justierung beziehungsweise Regelung und insbesondere zur Reduzierung der Rotordrehzahl (Tᵢₛₜ) wird während einzelner Kommutierungsphasen der Stromimpuls für mindestens einen Wicklungsstrang ausgesetzt. Dadurch, dass die Stromimpulse mit maximaler Stromstärke vorgesehen sind, wird das EMV-Verhalten des Motors erheblich verbessert. Trotzdem kann durch die sogenannte Slotabschaltung die Rotordrehzahl (Tᵢₛₜ) eingestellt und insbesondere reduziert werden, falls die Rotordrehzahl (Tᵢₛₜ) größer als die vorgegebene Solldrehzahl (Tₛₒₗₗ) ist.

Bevorzugterweise wird während einer Kommutierungsphase ein Zustand des elektronischen Schaltelementes unverändert gelassen. Hierunter ist zu verstehen, dass mittels des elektronischen Schaltelements die schaltbaren Widerstände nur zwischen Kommutierungsphasen beziehungsweise nur für eine auf eine aktuelle Kommutierungsphase folgende Kommutierungsphase geschaltet beziehungsweise verändert werden. Während einer aktuellen Kommutierungsphase bleibt der Schaltzustand und somit der Widerstandswert der Widerstandsbeschaltung vorzugsweise konstant. Der Strom beziehungsweise die Stromstärke des Stromimpulses wird während der Kommutierungsphase somit bevorzugterweise nicht verändert, sondern konstant gehalten.

Weiterhin ist bevorzugterweise vorgesehen, dass eine Stromstärke des Stromimpulses durch den Wicklungsstrang während einer Kommutierungsphase zur Reduzierung der Rotordrehzahl (Tᵢₛₜ) mittels des mindestens einen schaltbaren elektrischen Widerstands verringert wird.

Die Ansteuerelektronik weist bevorzugterweise mehrere in Reihe geschaltete elektrische Widerstände auf, welche mittels des elektronischen Schaltelementes oder mittels mehrerer elektronischer Schaltelemente individuell in Abhängigkeit der Differenz zwischen der ermittelten Rotordrehzahl (Tᵢₛₜ) und der vorgegebenen Solldrehzahl (Tₛₒₗₗ) hinzugeschaltet und/oder kurzgeschlossen werden, wodurch die Rotordrehzahl (Tᵢₛₜ) geregelt wird. Somit ist bevorzugterweise eine kontinuierliche Regelung durch kontinuierliche Erfassung der Rotordrehzahl (Tᵢₛₜ), durch den Vergleich mit der vorgegebenen Solldrehzahl (Tₛₒₗₗ) und durch die Ansteuerung mindestens eines schaltbaren elektrischen Widerstandes vorgesehen.

Beim Starten des Motors wird bevorzugterweise während zumindest einer Kommutierungsphase mindestens einer der Wicklungsstränge mit dem Stromimpuls mit einer maximalen Stromstärke beaufschlagt. Hierunter ist eine sogenannte Full Power Modulation zu verstehen. Der Motor wird somit bevorzugterweise ständig mit Volllast angesteuert, wobei zur Reduzierung der Rotordrehzahl (Tᵢₛₜ) ein elektrischer Widerstand oder mehrere elektrische Widerstände hinzugeschaltet werden, um die effektive Stromstärke durch den jeweiligen Wicklungsstrang während mindestens einer Kommutierungsphase zu reduzieren.

Bevorzugterweise ist die Ansteuerung des Motors beziehungsweise das Beaufschlagen eines Wicklungsstrangs des Motors mit einem Stromimpuls über eine Brückenschaltung, insbesondere eine H-Brücke vorgesehen. Diese Brückenschaltung kann in einem integrierten Schaltkreis (IC) integriert sein. Die Ansteuerung der Brückenschaltung beziehungsweise des ICs ist somit bevorzugterweise mittels eines Stroms mit maximal vorgegebener Stromstärke vorgesehen. Eine Reduzierung der Stromstärke wird außerhalb der Brückenschaltung beziehungsweise des ICs mittels Hinzuschalten mindestens eines schaltbaren elektrischen Widerstandes erreicht.

Erfindungsgemäß ist ferner ein Motor, insbesondere ein Lüftermotor, mit mehreren Wicklungssträngen vorgesehen. Der Motor weist mindestens ein Mittel zum Erfassen einer Rotordrehzahl und/oder einer Rotorlage eines Rotors des Motors sowie eine Ansteuerelektronik zur Erzeugung von Stromimpulsen für die Beaufschlagung der Wicklungsstränge des Motors auf. Erfindungsgemäß ist der Motor zur Ansteuerung mittels mindestens einem der vorbeschriebenen Verfahren sowie besonders bevorzugterweise für eine Ansteuerung mittels einer Kombination der beiden vorbeschriebenen Verfahren ausgebildet.

Es ist ein Lüfter mit einem vorbeschriebenen Motor für mindestens ein Verfahren zur Ansteuerung des Motors vorgesehen.

### Kurze Beschreibung der Zeichnungen

Es zeigen schematisch:
- Figur 1:: ein Schaltbild für eine Ansteuerelektronik eines Motors,
- Figur 2:: den Zeitablauf anhand eines Diagrammes für ein Verfahren zur Ansteuerung eines Motors mit Slotabschaltung, und
- Figur 3:: einen weiteren Zeitablauf anhand eines Diagrammes für ein Verfahren zur Ansteuerung eines Motors mittels Reduzierung einer Stromstärke durch hinzugeschaltete Vorwiderstände.

### Bevorzugte Ausführungsformen der Erfindung

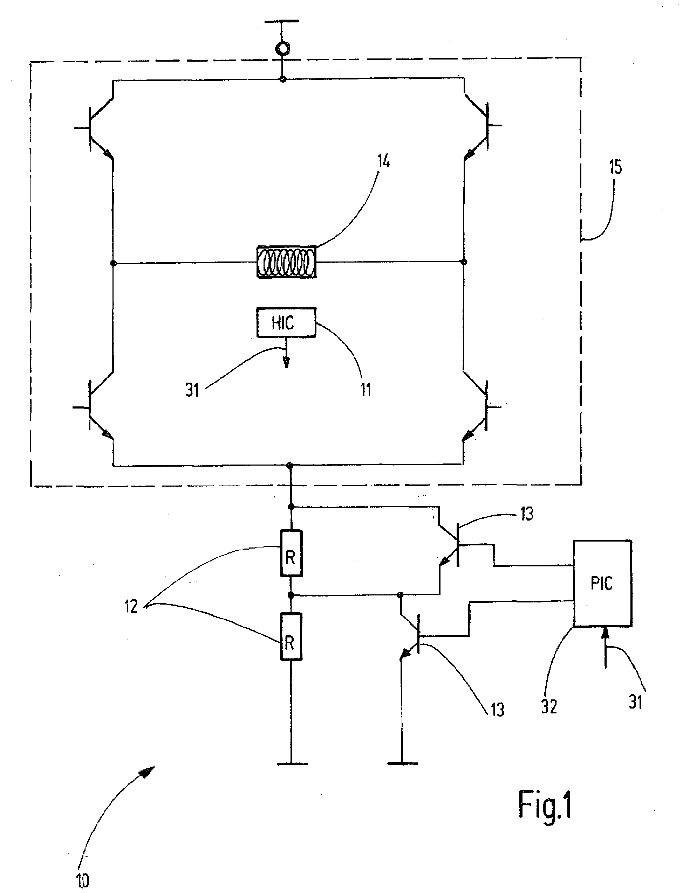

In Figur 1 ist ein Schaltbild einer Ansteuerelektronik 10 beziehungsweise eines Ausschnitts der Ansteuerelektronik 10 für einen Motor 100 gezeigt. Die Ansteuerelektronik 10 weist zwei wesentliche Schaltungsabschnitte auf. Ein erster Schaltungsabschnitt besteht aus einer Brückenschaltung beziehungsweise einer H-Brücke, welche in einen integrierten Schaltkreis (IC) 15 integriert ist. Ein zweiter Schaltungsabschnitt besteht aus einer Serienschaltung schaltbarer elektrischer Widerstände 12, welche mittels elektronischer Schaltelemente 13 geschaltet werden. Das Widerstandsnetzwerk aus den in Serie geschalteten schaltbaren elektrischen Widerständen 12 ist in Reihe zur H-Brücke geschaltet.

Die H-Brücke beziehungsweise der IC 15 wird für die Ansteuerung des Motors 100 gemäß der Erfindung immer mit Volllast beziehungsweise mit einer maximalen vorbestimmten Stromstärke angesteuert. Zur Feinjustierung können während einzelner Kommutierungsphasen elektrische Widerstände 12 mittels der elektronischen Schaltelemente 13 hinzugeschaltet werden, um den effektiven Strom des Stromimpulses 30 durch einen Wicklungsstrang 14 des Stators des Motors 100 zu reduzieren und somit die Rotordrehzahl (Tᵢₛₜ) zu reduzieren, falls diese die vorgegebene Solldrehzahl (Tₛₒₗₗ) übersteigt.

Zur Grobjustierung kann eine Slotunterbrechung vorgesehen sein. Hierbei werden während einzelner Kommutierungsphasen die Stromimpulse 30 durch Wicklungsstränge 14 ausgelassen. Übersteigt die erfasste Rotordrehzahl (Tᵢₛₜ) die vorgegebene Solldrehzahl (Tₛₒₗₗ), kann mittels Grobjustierung beispielsweise in einer folgenden Kommutierungsphase der Stromimpuls 30 durch einen Wicklungsstrang 14 ausgesetzt werden.

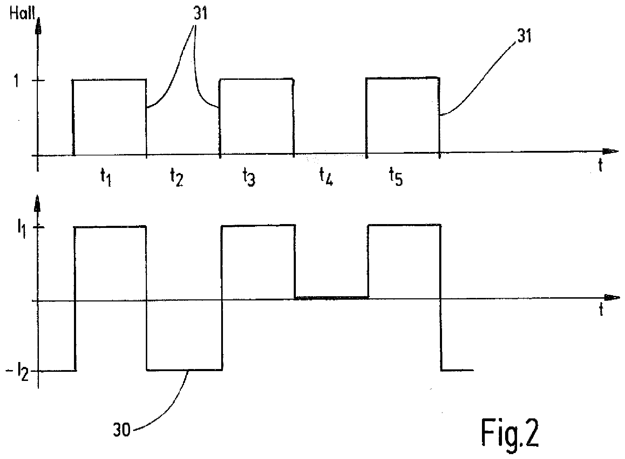

Figur 2 zeigt ein Diagramm, welches das Ausgangssignal 31 des Hallsensors und den Stromverlauf I der einzelnen Stromimpulse 30 durch die Wicklungsstränge 14 zeigt. Das Diagramm in Figur 2 basiert dabei auf dem Beispiel einer Grobjustierung. Beispielsweise wurde in dem in Figur 2 gezeigten Beispiel während der Kommutierungsphase t4 der Stromimpuls 30 unterbrochen. Mittels des Verfahrens zur Ansteuerung des Motors 100 wurde während der Kommutierungsphase t3 festgestellt, dass die Rotordrehzahl (Tᵢₛₜ) größer als die vorgegebene Solldrehzahl (Tₛₒₗₗ) ist, und somit entschieden, im folgenden Slot t4 beziehungsweise in der folgenden Kommutierungsphase den Stromimpuls 30 auszulassen beziehungsweise zu unterbrechen. Durch die kontinuierliche Überprüfung der Rotordrehzahl (Tᵢₛₜ) wurde während der Kommutierungsphase t4 wiederum festgestellt, dass die Rotordrehzahl (Tᵢₛₜ) sich der vorgegebenen Solldrehzahl (Tₛₒₗₗ) angenähert hat und somit wurde der Stromimpuls 30 während der Kommutierungsphase t5 wieder eingesetzt.

Bezüglich der Grobjustierung ist anzumerken, dass bei dem Verfahren vorgesehen ist, während einer Vollumdrehung des Rotors für möglichst wenige Kommutierungsphasen besonders bevorzugterweise nur während einer Kommutierungsphase, den Stromimpuls 30 zu unterbrechen beziehungsweise auszulassen.

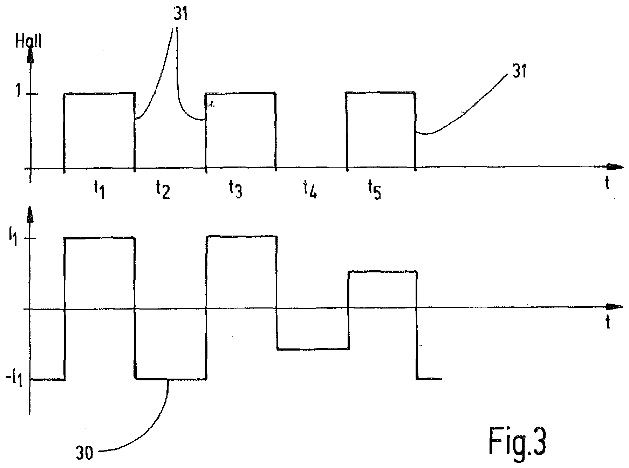

In Figur 3 ist ein entsprechendes Diagramm gezeigt, welches das resultierende Ergebnis einer Feinjustierung basierend auf dem Hinzuschalten von elektrischen Widerständen 12 zeigt. In dem in Figur 3 gezeigten Beispiel wurde während der Kommutierungsphasen t4 und t5 der effektive Strom durch die Wicklungsstränge dadurch reduziert, indem mittels der elektronischen Schaltelemente 13 elektronische Widerstände 12 hinzugeschaltet wurden. Hierdurch wird mittels Feinjustierung die Rotordrehzahl (Tᵢₛₜ) reduziert. Bei dem in Figur 3 gezeigten Beispiel wurden während der Kommutierungsphasen t1 bis t3 die elektrischen Widerstände 12 nicht hinzugeschlossen beziehungsweise mittels der elektronischen Schaltelemente 13 kurzgeschlossen.

## Patentansprüche

1. Verfahren zur elektrischen Ansteuerung eines Motors (100), insbesondere eines Lüftermotors, mit mehreren Wicklungssträngen (14), wobei der Motor (100) ein Mittel (11) zum Erfassen einer Rotordrehzahl (Tist) und/oder einer Rotorlage eines Rotors des Motors (100) aufweist, wobei die einzelnen Wicklungsstränge (14) mittels einer Ansteuerelektronik (10) des Motors (100) alternierend mit Stromimpulsen (30) beaufschlagt werden,
**dadurch gekennzeichnet,**
**dass** zur Grobjustierung der Rotordrehzahl (Tist) während der vollen Umdrehung des Rotors mindestens einem der Wicklungsstränge (14) kein Stromimpuls (30) zugeführt wird, falls die erfasste Rotordrehzahl (Tist) größer als die vorgegebene Solldrehzahl (Tsoll) ist und eine Differenz zwischen der ermittelten Rotordrehzahl (Tᵢₛₜ) und der vorgegebenen Solldrehzahl (Tₛₒₗₗ) eine vorgegebene Schwelle überschreitet;
und zur Feinjustierung der Rotordrehzahl (Tist) ein schaltbarer elektrischer Widerstand (12) für zumindest eine folgende Kommutierungsphase mittels eines elektronischen Schaltelements (13) dazu geschaltet wird, falls die erfasste Rotordrehzahl (Tist) größer als die vorgegebene Solldrehzahl (Tsoll) ist und die Differenz zwischen der ermittelten Rotordrehzahl (Tᵢₛₜ) und der vorgegebenen Solldrehzahl (Tₛₒₗₗ) die vorgegebene Schwelle unterschreitet, wobei der elektrische Widerstand (12) in Reihe zum Wicklungsstrang (14) der jeweiligen Kommutierungsphase geschaltet ist.

2. Verfahren gemäß Anspruch 1,
**dadurch gekennzeichnet,**
**dass** die Rotordrehzahl (Tist) kontinuierlich erfasst wird und für eine folgende Kommutierungsphase die Stromzufuhr an einem der Wicklungsstränge (14) ausgesetzt wird, falls die Rotordrehzahl (Tist) größer als die vorgegebene Solldrehzahl (Tsoll) ist.

3. Verfahren gemäß Anspruch 1 oder 2,
**dadurch gekennzeichnet,**
**dass** zur Reduzierung der Rotordrehzahl (Tist) während der vollen Umdrehung des Rotors höchstens der Hälfte der Wicklungsstränge (14) kein Stromimpuls (30) zugeführt wird, falls die erfasste Rotordrehzahl (Tist) größer als die vorgegebene Solldrehzahl (Tsoll) ist.

4. Verfahren gemäß einem der vorhergehenden Ansprüche,
**dadurch gekennzeichnet,**
**dass** während einer Kommutierungsphase ein Zustand des elektronischen Schaltelements (13) unverändert gelassen wird.

5. Verfahren gemäß einem der vorhergehenden Ansprüche,
**dadurch gekennzeichnet,**
**dass** eine Stromstärke des Stromimpulses (30) durch den Wicklungsstrang (14) während der folgenden Kommutierungsphase zur Reduzierung der Rotordrehzahl (Tist) mittels des mindestens einen schaltbareren elektrischen Widerstands (12) verringert wird.

6. Verfahren gemäß einem der vorhergehenden Ansprüche,
**dadurch gekennzeichnet,**
**dass** die Ansteuerelektronik mehrere in Reihe geschaltete schaltbare elektrische Widerstände (12) aufweist, welche mittels des elektronischen Schaltelements (13) oder mittels mehrerer elektronischer Schaltelemente (13) individuell in Abhängigkeit der Differenz zwischen der ermittelten Rotordrehzahl (Tist) und der vorgegebenen Solldrehzahl (Tsoll) hinzu geschaltet und/oder kurzgeschlossen werden, und dabei die Rotordrehzahl (Tist) geregelt wird.

7. Verfahren gemäß einem der vorhergehenden Ansprüche,
**dadurch gekennzeichnet,**
**dass** beim Starten des Motors (100) während zumindest einer Kommutierungsphase zumindest einer der Wicklungsstränge (14) mit dem Stromimpuls mit einer maximalen Stromstärke beaufschlagt wird.

8. Motor (100), insbesondere ein Lüftermotor, mit mehreren Wicklungssträngen (14), wobei der Motor (100) ein Mittel (11) zum Erfassen einer Rotordrehzahl (Tist) und/oder einer Rotorlage eines Rotors des Motors (100) und eine Ansteuerelektronik (10) aufweist,
**dadurch gekennzeichnet,**
**dass** die einzelnen Wicklungsstränge (14) mittels der Ansteuerelektronik (10) des Motors (100) alternierend mit Stromimpulsen (30) beaufschlagt werden, mittels eines Verfahrens gemäß einem der vorhergehenden Ansprüche.

9. Lüfter (200) mit einem Motor (100) gemäß Anspruch 8.

## Claims

1. Method for electrical control of a motor (100), in particular a fan motor, with several winding strands (14), wherein the motor (100) has a means (11) for detecting a rotor speed (Tist) and/or a rotor position of a rotor of the motor (100), wherein current pulses (30) are alternately applied to the individual winding strands (14) by means of a control electronics (10) of the motor (100), **characterized in that**
no current pulse (30) is supplied to at least one of the winding strands (14) for coarse adjustment of the rotor speed (Tist) during the full rotation of the rotor if the detected rotor speed (Tist) is greater than the predetermined target speed (Tsoll) and a difference between the detected rotor speed (Tᵢₛₜ) and the predetermined target speed (Tₛₒₗₗ) exceeds the predetermined threshold;
and for fine adjustment of the rotor speed (Tist), a switchable electrical resistor (12) is connected thereto for at least one subsequent commutation phase by means of an electronic switching element (13), if the detected rotor speed (Tist) is greater than the predetermined target speed (Tsoll) and the difference between the determined rotor speed (Tᵢₛₜ ) and the predetermined target speed (Tₛₒₗₗ) falls below the predetermined threshold, wherein the electrical resistor (12) is connected in series with the winding strand (14) of the respective commutation phase.

2. Method according to claim 1,
**characterized in that**
the rotor speed (Tist) is continuously detected and, for a subsequent commutation phase, the current supply to one of the winding strands (14) is suspended if the rotor speed (Tist) is greater than the predetermined target speed (Tsoll).

3. Method according to claim 1 or 2,
**characterized in that**
in order to reduce the rotor speed (Tist), no current pulse (30) is supplied to at most half of the winding strands (14) during the full rotation of the rotor if the detected rotor speed (Tist) is greater than the predetermined target speed (Tsoll).

4. Method according to one of the preceding claims,
**characterized in**
a state of the electronic switching element (13) is left unchanged during a commutation phase.

5. Method according to one of the preceding claims,
**characterized in that**
a current intensity of the current pulse (30) through the winding strand (14) is reduced during the following commutation phase for reducing the rotor speed (Tist) by means of the at least one switchable electrical resistor (12).

6. Method according to one of the preceding claims,
**characterized in that**
the control electronics has several of series-connected switchable electrical resistors (12), which are connected and/or short-circuited individually by means of the electronic switching element (13) or by means of a plurality of electronic switching elements (13) as a function of the difference between the determined rotor speed (Tist) and the predetermined target speed (Tsoll), and the rotor speed (Tist) is thereby regulated.

7. Method according to one of the preceding claims,
**characterized in that**
when the motor (100) is started during at least one commutation phase, at least one of the winding strands (14) is subjected to the current pulse with a maximum current intensity.

8. Motor (100), in particular a fan motor, with several winding strands (14), wherein the motor (100) has a means (11) for detecting a rotor speed (Tist) and/or a rotor position of a rotor of the motor (100) and a control electronics (10),
**characterized in that**
current pulses (30) are alternately applied to the individual winding strands (14) by means of the control electronics (10) of the motor (100), by means of a method according to one of the preceding claims.

9. A fan (200) with a motor (100) according to claim 8.

## Revendications

1. Procédé de commande électrique d'un moteur (100), en particulier d'un moteur de ventilateur, avec plusieurs brins d'enroulement (14), le moteur (100) présentant un moyen (11) pour détecter une vitesse de rotation du rotor (Tist) et/ou une position du rotor d'un rotor du moteur (100), les différents brins d'enroulement (14) étant alimentés en alternance par des impulsions de courant (30) au moyen d'un système électronique de commande (10) du moteur (100), **caractérisé en ce que** pour l'ajustement grossier de la vitesse de rotation du rotor (Tist) pendant la rotation complète du rotor, aucune impulsion de courant (30) n'est amenée à au moins l'un des brins d'enroulement (14) si la vitesse de rotation du rotor (Tist) détectée est supérieure à la vitesse de rotation de consigne (Tsoll) prédéterminée et si une différence entre la vitesse de rotation du rotor (Tist) détectée et la vitesse de rotation de consigne (Tsoll) prédéterminée dépasse un seuil prédéterminé ; et pour le réglage fin de la vitesse de rotation du rotor (Tist), une résistance électrique commutable (12) est connectée en plus pour au moins une phase de commutation suivante au moyen d'un élément de commutation électronique (13), si la vitesse de rotation du rotor (Tist) détectée est supérieure à la vitesse de rotation de consigne (Tsoll) prédéfinie et si la différence entre la vitesse de rotation du rotor (Tist) détectée et la vitesse de rotation de consigne (Tsoll) prédéfinie est inférieure au seuil prédéfini, la résistance électrique (12) étant montée en série avec le brin d'enroulement (14) de la phase de commutation respective.

2. Procédé selon la revendication 1, **caractérisé en ce que** la vitesse de rotation du rotor (Tist) est détectée en continu et, pour une phase de commutation suivante, l'alimentation en courant de l'un des brins d'enroulement (14) est suspendue si la vitesse de rotation du rotor (Tist) est supérieure à la vitesse de rotation de consigne (Tsoll) prédéfinie.

3. Procédé selon la revendication 1 ou 2, **caractérisé en ce que** pour réduire la vitesse de rotation du rotor (Tist) pendant la rotation complète du rotor, aucune impulsion de courant (30) n'est appliquée à au plus la moitié des brins d'enroulement (14) si la vitesse de rotation du rotor (Tist) détectée est supérieure à la vitesse de rotation de consigne (Tsoll) prédéterminée.

4. Procédé selon l'une quelconque des revendications précédentes, **caractérisé en ce que** pendant une phase de commutation, un état de l'élément de commutation électronique (13) est laissé inchangé.

5. Procédé selon l'une quelconque des revendications précédentes, **caractérisé en ce qu'**une intensité de l'impulsion de courant (30) traversant le brin d'enroulement (14) est réduite pendant la phase de commutation suivante pour réduire la vitesse de rotation du rotor (Tist) au moyen de l'au moins une résistance électrique commutable (12).

6. Procédé selon l'une quelconque des revendications précédentes, **caractérisé en ce que** l'électronique de commande présente plusieurs résistances électriques commutables (12) montées en série, qui sont ajoutées et/ou court-circuitées individuellement au moyen de l'élément de commutation électronique (13) ou au moyen de plusieurs éléments de commutation électroniques (13) en fonction de la différence entre la vitesse de rotation du rotor (Tist) déterminée et la vitesse de rotation de consigne (Tsoll) prédéfinie, et la vitesse de rotation du rotor (Tist) est alors régulée.

7. Procédé selon l'une des revendications précédentes, **caractérisé en ce que** lors du démarrage du moteur (100), pendant au moins une phase de commutation, au moins l'un des brins d'enroulement (14) est alimenté par l'impulsion de courant avec une intensité de courant maximale.

8. Moteur (100), en particulier un moteur de ventilateur, avec plusieurs brins d'enroulement (14), le moteur (100) présentant un moyen (11) pour détecter une vitesse de rotation du rotor (Tist) et/ou une position du rotor d'un rotor du moteur (100) et un système électronique de commande (10), **caractérisé en ce que** les différents brins d'enroulement (14) sont alimentés alternativement par des impulsions de courant (30) au moyen de l'électronique de commande (10) du moteur (100), par un procédé selon l'une des revendications précédentes.

9. Ventilateur (200) comprenant un moteur (100) selon la revendication 8.
